# EUROPEAN PATENT APPLICATION

(11) **EP 4 564 571 A2**
(43) Date of publication of application: **04.06.2025**
(21) Application number: 24215772.5
(22) Date of filing: 27.11.2024
(51) Int. Cl.: H01M 50/403, H01M 50/414, H01M 50/417, H01M 50/426, H01M 50/434, H01M 50/443, H01M 50/446, H01M 50/491, H01M 50/494, H01M 50/497, H01M 10/0525

(54) **SEPARATOR AND PREPARATION METHOD THEREOF, BATTERY, AND ELECTRIC DEVICE**

(30) Priority: 30.11.2023 CN 202311636881
(71) Applicant: BYD Company Limited, Shenzhen, Guangdong 518118 (CN)
(72) Inventor: JIN, Peipei, Shenzhen, 518118 (CN); PAN, Zeng, Shenzhen, 518118 (CN); ZHOU, Wengui, Shenzhen, 518118 (CN); SONG, Zhenglin, Shenzhen, 518118 (CN); HE, Kefeng, Shenzhen, 518118 (CN)
(74) Representative: Mathys & Squire

(57) **Abstract**

The present disclosure provides a separator, including the following components: a porous polymer substrate and solid electrolyte particles. The solid electrolyte particles are dispersed in the porous polymer substrate, and the solid electrolyte particles in the porous polymer substrate have a dispersion degree range ranging from 1 µm to 6 µm and a particle coverage rate ranging from 5% to 20%. In addition, the present disclosure further discloses a method for preparing the foregoing separator, a battery, and an electric device. The separator provided in the present disclosure has high tensile strength, and improves the wetting capability of an electrolyte for the separator and ionic conductivity of the separator, thereby improving electrochemical performance of the battery at low temperatures.

## Description

### FIELD

The present disclosure relates to the technical field of battery materials, and specifically, to a separator and a preparation method thereof, a battery, and an electric device.

### BACKGROUND

Polymer separators prepared by a tensile method have been widely used in the production of separators of lithium-ion batteries. A conventional polymer separator mainly provides a channel for ions to pass between positive and negative electrodes. However, the conventional polymer separator has some performance deficiencies such as poor heat resistance and poor electrolyte wetting, which fails to help improve electrochemical performance of a battery. In recent years, in some studies, inorganic particles and polymers are blended and extruded to improve the performance of a separator. However, actually, the addition of inorganic particles has limited improvement on heat resistance of the polymer separator, and leads to a decrease in tensile strength of the polymer separator. In addition, the addition of inorganic particles reduces the performance of conducting lithium ions of the separator, and also affects wetting capability of the separator by an electrolyte, which affects ionic conductivity of the separator and increases internal resistance of a battery, leading to uneven deposition of lithium ions and the problem of dark spots, which is not conducive battery capacity at low temperatures.

### SUMMARY

In view of the existing problem of reduced tensile strength and reduced ionic conductivity of a polymer separator with inorganic particles added, the present disclosure provides a separator and a preparation method thereof, a battery, and an electric device.

Technical solutions adopted in the present disclosure to resolve the foregoing technical problems are as follows:

In a first aspect, the present disclosure provides a separator, including the following components:
A porous polymer substrate and solid electrolyte particles, and
the solid electrolyte particles are dispersed in the porous polymer substrate, and the solid electrolyte particles in the porous polymer substrate have a dispersion degree range ranging from 1 µm to 6 µm and a particle coverage rate ranging from 5% to 20%.

Optionally, the solid electrolyte particles in the porous polymer substrate have the dispersion degree range ranging from 1 µm to 4.5 µm and the particle coverage rate ranging from 12% to 19%.

Optionally, based on a total weight of the separator being 100%, a mass content of the porous polymer substrate ranges from 50% to 90%, and a mass content of the solid electrolyte particles ranges from 10% to 50%.

Optionally, based on a total weight of the separator being 100%, a mass content of the porous polymer substrate ranges from 50% to 80%, and a mass content of the solid electrolyte particles ranges from 20% to 50%.

Optionally, a melting point of the porous polymer substrate ranges from 80°C to 180°C.

Optionally, the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride.

Optionally, the solid electrolyte particles comprise one or more of Li_{1.3}Al_{0.3}Ti_{1.7}(PO₄)₃, Li₇La₃Zr₂O₁₂, Li_{0.34}La_{0.56}TiO₃, and Li_{1.5}Al_{0.5}Ge_{1.5}(PO₄)₃.

Optionally, a particle size D50 of the solid electrolyte particles ranges from 0.5 µm to 5 µm.

Optionally, the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.

Optionally, a thickness of the separator ranges from 2 µm to 20 µm.

In a second aspect, the present disclosure provides a method for preparing the foregoing separator, including the steps of:
The solid electrolyte particles are pre-dispersed in paraffin oil to form a suspension;
the suspension is mixed with a polymer material to prepare a precursor of the separator; and
the paraffin oil is removed from the precursor of the separator to obtain the separator.

Optionally, a mass ratio of the polymer material to the paraffin oil is (25-35):(65-75).

Optionally, the paraffin oil is removed through organic extraction.

In a third aspect, the present disclosure provides a battery, including a positive electrode, a negative electrode, and the foregoing separator. The separator is located between the positive electrode and the negative electrode.

In a fourth aspect, the present disclosure provides an electric device, including the battery.

In the separator provided in the present disclosure, the solid electrolyte particles are used as a filler in the porous polymer substrate. Compared with conventional inorganic particles, the solid electrolyte particles are not only able to improve separator resistance to high temperature, but also effectively improve the ion transport capability of the separator due to internal lattice defects and voids for lithium ion transport. In addition, it is found through research that the dispersion degree range and particle coverage rate of the solid electrolyte particles in the porous polymer substrate can affect the tensile strength of the separator and the wetting capability of the electrolyte. When the solid electrolyte particles in the porous polymer substrate have the dispersion degree range ranging from 1 µm to 6 µm and the particle coverage rate ranging from 5% to 20%, the tensile strength of the separator can be effectively ensured, the wetting capability of the electrolyte for the separator can be improved, avoiding dark spots on the negative electrode due to a poor diffusion effect of the electrolyte, and also effectively avoiding lithium dendrites due to uneven deposition of lithium ions, and the ionic conductivity of the separator can be improved, thereby improving the electrochemical performance of the battery at low temperatures.

### DETAILED DESCRIPTION

To make the technical problems to be resolved in the present disclosure, technical solutions, and beneficial effects more comprehensible, the following further describes the present disclosure in detail with reference to embodiments. It should be understood that the specific embodiments described herein are merely used to explain the present disclosure but are not intended to limit the present disclosure.

An embodiment of the present disclosure provides a separator, including the following components:
a porous polymer substrate and solid electrolyte particles, and
the solid electrolyte particles are dispersed in the porous polymer substrate, and the solid electrolyte particles in the porous polymer substrate have a dispersion degree range ranging from 1 µm to 6 µm and a particle coverage rate ranging from 5% to 20%.

In the separator, the solid electrolyte particles are used as a filler in the porous polymer substrate. Compared with conventional inorganic particles, the solid electrolyte particles are not only able to improve separator resistance to high temperature, but also effectively improve the ion transport capability of the separator due to internal lattice defects and voids for lithium ion transport. In addition, it is found through research that the dispersion degree range and particle coverage rate of the solid electrolyte particles in the porous polymer substrate can affect the tensile strength of the separator and the wetting capability of the electrolyte. When the solid electrolyte particles in the porous polymer substrate have the dispersion degree range ranging from 1 µm to 6 µm and the particle coverage rate ranging from 5% to 20%, the tensile strength of the separator can be effectively ensured, the wetting capability of the electrolyte for the separator can be improved, avoiding dark spots on the negative electrode due to a poor diffusion effect of the electrolyte, and also effectively avoiding lithium dendrites due to uneven deposition of lithium ions, and the ionic conductivity of the separator can be improved, thereby improving the electrochemical performance of the battery at low temperatures.

In the description of the present disclosure, the term "dispersion degree range" can be obtained by the following testing method:

A Scanning Electron Microscope (SEM) image of a surface of the separator is taken at 5000× magnification. A region of 0.5 cm × 0.5 cm in length and width is selected in the SEM image. A distance between adjacent solid electrolyte particles is measured in the region. A difference between a maximum value of the distance and a minimum value of the distance that are obtained through measurement is the dispersion degree range of the solid electrolyte particles in the porous polymer substrate.

In the description of the present disclosure, the term "particle coverage rate" reflects the coating state of lithium-rich material particles in the polymer substrate. The particle coverage rate can be obtained by the following testing method:

An SEM image of the surface of the separator is taken at 5000× magnification. A region of 0.5 cm × 0.5 cm in length and width is selected in the SEM image, and the solid electrolyte particles are stained by the software. A ratio of a stained area to a non-stained area is calculated to obtain the particle coverage rate.

In different embodiments, the dispersion degree range of the solid electrolyte particles in the porous polymer substrate may be 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.8 µm, 5.0 µm, 5.4 µm, 5.8 µm, or 6.0 µm. The particle coverage rate of the solid electrolyte particles in the porous polymer substrate may be 5%, 6%, 7%, 8%, 9%, 10%, 11%, 12%, 13%, 14%, 15%, 16%, 17%, 18%, 19%, or 20%.

In some embodiments, the solid electrolyte particles in the porous polymer substrate have the dispersion degree range ranging from 1 µm to 4.5 µm and the particle coverage rate ranging from 12% to 19%.

When the dispersion degree range and the particle coverage rate of the solid electrolyte particles in the porous polymer substrate are within the foregoing ranges, the tensile strength and ionic conductivity of the separator, and the wetting capability of the electrolyte for the separator are further improved.

In some embodiments, based on a total weight of the separator being 100%, a mass content of the porous polymer substrate ranges from 50% to 90%, and a mass content of the solid electrolyte particles ranges from 10% to 50%.

The porous polymer substrate is a main substrate for maintaining morphology and toughness of the separator and is also a main substrate for forming a porous structure. The porous structure provides permeability for the electrolyte, and the polymer material itself provides affinity and wetting capability for the electrolyte, ensuring the exchange of ions in the electrolyte at both sides of the separator. The solid electrolyte particles are used to improve ionic conductivity and resistance to high temperature of the separator. When the mass content of the porous polymer substrate and the mass content of the solid electrolyte particles are within the foregoing ranges, the separator can be ensured to have high tensile strength, good resistance to high temperature, and good ion conducting capability.

In some embodiments, based on a total weight of the separator being 100%, a mass content of the porous polymer substrate ranges from 50% to 80%, and a mass content of the solid electrolyte particles ranges from 20% to 50%.

In some embodiments, a melting point of the porous polymer substrate ranges from 80°C to 180°C.

When the melting point of the porous polymer substrate is within the foregoing range, the porous polymer substrate has good heat resistance and flexibility.

In some embodiments, the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride. The high-density polyethylene has a density ranging from 0.94 g/m³ to 0.95 g/m³; the ultra-high-density polyethylene has a density greater than 0.96 g/m³; the low-density polyethylene has a density about 0.91 g/m³; the high-density polypropylene has a density ranging from 0.89 g/m³ to 0.91 g/m³; and the ultra-high-density polypropylene has a density greater than 0.91 g/m³.

In some embodiments, the solid electrolyte particles comprise one or more of LATP(Li_{1.3}Al_{0.3}Ti_{1.7}(PO₄)₃), LLZO(Li₇La₃Zr₂O₁₂), LLTO(Li_{0.34}La_{0.56}TiO₃), and LAGP(Li_{1.5}Al_{0.5}Ge_{1.5}(PO₄)₃).

By selecting one or more of LATP(Li_{1.3}Al_{0.3}Ti_{1.7}(PO₄)₃), LLZO(Li₇La₃Zr₂O₁₂), LLTO(Li_{0.34}La_{0.56}TiO₃), and LAGP(Li_{1.5}Al_{0.5}Ge_{1.5}(PO₄)₃) as the solid electrolyte particles, there are advantages of high lithium-ion conductivity and thermal stability, which helps reduce internal resistance of the battery and improve safety of the battery.

In some embodiments, a particle size (D50) of the solid electrolyte particles ranges from 0.5 µm to 5 µm.

In different embodiments, the particle size (D50) of the solid electrolyte particles may be 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, or 5 µm.

The particle size (D50) of the solid electrolyte particles is related to the dispersion degree of the solid electrolyte particles in the porous polymer substrate. When the particle size (D50) of the solid electrolyte particles is within the foregoing range, the solid electrolyte particles have a larger particle size (D50) than a conventional inorganic filler, which can effectively avoid particle aggregation caused by van der Waals forces or electrostatic forces, improving uniformity of the dispersion of the solid electrolyte particles in the porous polymer substrate, and improving consistency of performance in regions of the separator.

Particle size (D50) refers to a median particle size of the solid electrolyte particles, also known as the volume average particle size, indicating the corresponding particle size when the cumulative volume distribution percentage of the material reaches 50%. The particle size D50 of the solid electrolyte particles can be measured by a laser strength tester.

The tensile strength of the separator is affected by the porous polymer substrate and is also affected by the dispersion degree range and particle coverage rate of the added solid electrolyte particles. When the dispersion degree range of the solid electrolyte particles is controlled to range from 1 µm to 6 µm, and the particle coverage rate is controlled to range from 5% to 20%, the tensile strength of the separator can be ensured to be at a high level.

In some embodiments, the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.

In some embodiments, a tensile strength of the separator ranges from 150 MPa to 300 MPa.

In some embodiments, a pore size of the separator ranges from 20 nm to 70 nm, and porosity of the separator ranges from 20% to 70%.

The pore size and the porosity of the separator affect electrolyte permeability of the separator, and also affect a barrier effect of the separator for the positive and negative electrodes. When the pore size and the porosity of the separator are within the foregoing ranges, a short circuit between the positive and negative electrodes is prevented, reducing a self-discharge rate; and the electrolyte permeability is good, improving ionic conductivity.

In some embodiments, air permeability of the separator ranges from 50 s/100 cc to 500 s/100 cc.

The air permeability of the separator is affected to a certain extent by the porosity of the separator. When the air permeability of the separator is within the foregoing range, permeation efficiency of lithium ions can be increased.

In some embodiments, an electrolyte diffusion radius of the separator ranges from 0.2 cm to 3 cm.

The electrolyte diffusion radius of the separator indicates permeation and wetting effects of the electrolyte on the separator.

In the description of the present disclosure, the term "electrolyte diffusion radius of the separator" can be obtained by the following testing method:

The separator is placed in a circular hollow fixture with a radius of 3 cm to make the separator suspended. 30 µL of electrolyte is drawn by using a pipette and added dropwise to the center of the separator. After 30s, the electrolyte diffusion radius is measured.

In some embodiments, a thickness of the separator ranges from 2 µm to 20 µm.

When the thickness of the separator is within the foregoing range, the positive electrode can be effectively isolated from the negative electrode while ion permeability can be ensured, and specific puncture-resistant mechanical strength is provided.

Another embodiment of the present disclosure provides a method for preparing the foregoing separator, including the steps of:
The solid electrolyte particles are pre-dispersed in paraffin oil to form a suspension;
the suspension is mixed with a polymer material to prepare a precursor of the separator; and
the paraffin oil is removed from the precursor of the separator to obtain the separator. The separator includes the porous polymer substrate and the solid electrolyte particles dispersed in the porous polymer substrate.

Compared with existing separator preparation methods, a material treatment sequence before extrusion is changed in the present disclosure. Specifically, different from an existing inorganic filler blending method, in this preparation method, the solid electrolyte particles are first dispersed in the paraffin oil to form the suspension, and then the suspension and the polymer material are mixed and extruded to obtain the precursor of the separator. The paraffin oil provides a pore-forming effect. During blending, the paraffin oil and the polymer material are fully mixed. After the subsequent operation of removing the paraffin oil, pores are formed in the polymer material through the removal of the paraffin oil, to obtain the porous polymer substrate. Premixing the solid electrolyte particles and the paraffin oil to form the suspension is also an importance operation to reduce the dispersion degree range of the solid electrolyte particles in the porous polymer substrate and increase the particle coverage rate. The dispersion in the paraffin oil can reduce the aggregation of the solid electrolyte particles, thereby improving the dispersion of the solid electrolyte particles in the porous polymer substrate. In this case, the prepared separator has high uniformity of the solid electrolyte particles, which helps increase the tensile strength and ion-conducting capability of the separator. More importantly, as the solid electrolyte particles are dispersed in the paraffin oil, during the removal of the paraffin oil and the formation of pores, the surface of the solid electrolyte particles can be fully exposed on the inner of the pores, which avoids the coverage on the solid electrolyte particles by the polymer material, and helps take full advantage of high ionic conductivity of the solid electrolyte particles, increasing the particle coverage rate of the separator without increasing the addition amount of the solid electrolyte particles.

In some embodiments, a mass ratio of the polymer material to the paraffin oil is (25-35):(65-75).

The mass ratio of the polymer material to the paraffin oil is controlled to be within the foregoing range, which helps control the pore size and porosity of the separator, ensuring the ion-conducting capability of the separator.

In some embodiments, the manner of dispersing the solid electrolyte particles in the paraffin oil includes one or more of stirring, ultrasonic treatment, and mechanical grinding.

In some embodiments, the precursor of the separator is prepared through extrusion.

In some embodiments, the paraffin oil is removed through organic extraction.

Specifically, the precursor of the separator is placed in an organic solvent, the paraffin oil is dissolved in the organic solvent to be removed from the precursor of the separator, and then the precursor of the separator with the paraffin oil removed is dried to obtain the separator.

In some embodiments, the precursor of the separator is stretched after the extrusion operation, to obtain the precursor of the separator of a desired thickness.

Another embodiment of the present disclosure provides a battery, including a positive electrode, a negative electrode, and the foregoing separator. The separator is located between the positive electrode and the negative electrode.

By using the foregoing separator, as the separator has high tensile strength and ionic conductivity, the resistance to lithium dendrite growth of the obtained battery can be significantly improved, avoiding a short circuit due to the separator being punctured by lithium dendrites, and the impedance of the battery can be reduced, improving performance of the battery at low temperatures.

Another embodiment of the present disclosure provides an electric device, including the battery.

As the battery provided in the embodiment of the present disclosure is thus having high market competitiveness.

In some embodiments of the present disclosure, the electric device includes, but is not limited to, 3C-type electronic devices, and electric vehicles including, but is not limited to, new energy vehicles, and force-helping bicycles, etc.

The following further describes the present disclosure through examples.

### Example 1

This example describes the separator and the preparation method thereof, and the battery that were disclosed in the present disclosure, including the following operation steps:

The polymer material was polyvinylidene fluoride with a melting point of 155°C in a mass proportion of 59%.

The solid electrolyte particles were LLZO(Li₇La₃Zr₂O₁₂) with a particle size (D50) of 1.5 µm in a mass proportion of 41%.

The solid electrolyte particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

The dispersion degree range was obtained by the following testing: An SEM image of the surface of the separator was taken at 5000× magnification. A region of 0.5 cm × 0.5 cm in length and width was selected in the SEM image. A distance between adjacent solid electrolyte particles was measured in the region. A difference between a maximum value of the distance and a minimum value of the distance that were obtained through measurement was a dispersion degree range of the solid electrolyte particles in the porous polymer substrate, which was 1.5 µm.

The particle coverage rate was obtained by the following testing: An SEM image of the surface of the separator was taken at 5000× magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 18.5%.

Permeability of the separator was obtained by the following testing: the separator greater than 10 cm in length, was used for permeability test by using permeability tester (brand: SYSTESTER, model: GTR) .

Porosity of the separator was obtained by the following testing: the separator with 0.5 cm × 0.5 cm in length and width was selected. The porosity of the separator was obtained according to a formula: P=(1-m/(L × b × d × p₀)) × 100%. Where, P was the porosity of the separator. m was the mass of the separator, the unit was g. L was a length of the separator, the unit was cm. b was the width of the separator, the unit was cm. d was the thickness of the separator, the unit was µm. p₀ was the density of the diaphragm, the unit was g/cm³. Both L and b was 10 cm.

Aperture of the separator was obtained by the following testing: the separator was observed under a microscope and the average value of 100 apertures was calculated.

The foregoing separator has porosity of 51%, a pore size of 54 nm, air permeability of 75 s/100 cc, and a thickness of 7 µm.

### Example 2

This example describes the separator and the preparation method thereof, and the battery that were disclosed in the present disclosure, including the following operation steps:

The polymer material was ultra-high-density polyethylene with a melting point of 135°C in a mass proportion of 62%.

The solid electrolyte particles are LATP(Li_{1.3}Al_{0.3}Ti_{1.7}(PO₄)₃) with a particle size (D50) of 2.0 µm in a mass proportion of 38%.

The solid electrolyte particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 1.63 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 15.0%.

The foregoing separator has porosity of 43%, a pore size of 50 nm, air permeability of 110 s/100 cc, and a thickness of 9 µm.

### Example 3

This example describes the separator and the preparation method thereof, and the battery that were disclosed in the present disclosure, including the following operation steps:

The polymer material was high-density polypropylene with a melting point of 165°C in a mass proportion of 80%.

The solid electrolyte particles were LLZO(Li₇La₃Zr₂O₁₂) with a particle size (D50) of 0.6 µm in a mass proportion of 20%.

The solid electrolyte particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 4.2 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 12.5%.

The foregoing separator has porosity of 38%, a pore size of 42 nm, air permeability of 120 s/100 cc, and a thickness of 10 µm.

### Example 4

This example describes the separator and the preparation method thereof, and the battery that were disclosed in the present disclosure, including the following operation steps:

The polymer material was polyvinylidene fluoride with a melting point of 155°C in a mass proportion of 52%.

The solid electrolyte particles are LLZO(Li₇La₃Zr₂O₁₂) with a particle size (D50) of 1.5 µm in a mass proportion of 48%.

The solid electrolyte particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 1.0 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 19.5%.

The foregoing separator has porosity of 52%, a pore size of 54 nm, air permeability of 70 s/100 cc, and a thickness of 7 µm.

### Example 5

This example describes the separator and the preparation method thereof, and the battery that were disclosed in the present disclosure, including the following operation steps:
The polymer material was polyvinylidene fluoride with a melting point of 155°C in a mass proportion of 88%.

The solid electrolyte particles are LLZO(Li₇La₃Zr₂O₁₂) with a particle size (D50) of 1.5 µm in a mass proportion of 12%.

The solid electrolyte particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 5.5 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 9%.

The foregoing separator has porosity of 38%, a pore size of 45 nm, air permeability of 130 s/100 cc, and a thickness of 7 µm.

### Comparative Example 1

This comparative example comparatively describes the separator and the preparation method thereof, and the battery that were disclosed in the present disclosure, including the following operation steps:
The polymer material is ultra-high-density polyethylene with a melting point of 135°C in a mass proportion of 45%.

The solid electrolyte particles were LATP(Li_{1.3}Al_{0.3}Ti_{1.7}(PO₄)₃) with a particle size (D50) of 2.0 µm in a mass proportion of 55%.

The solid electrolyte particles, paraffin oil, and the polymer material were blended directly, and were then co-extruded and stretched to obtain a precursor of the separator. A mass ratio of the paraffin oil to the polymer material was 70:30. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 0.6 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 23%.

The foregoing separator has porosity of 55%, a pore size of 50 nm, air permeability of 60 s/100 cc, and a thickness of 9 µm.

### Comparative Example 2

This comparative example comparatively describes the separator and the preparation method thereof, and the battery that were disclosed in the present disclosure, including the following operation steps:
The polymer material was ultra-high-density polyethylene with a melting point of 135°C in a mass proportion of 92%.

The solid electrolyte particles were LATP(Li_{1.3}Al_{0.3}Ti_{1.7}(PO₄)₃) with a particle size (D50) of 2.0 µm in a mass proportion of 8%.

The solid electrolyte particles, paraffin oil, and the polymer material were blended directly, and were then co-extruded and stretched to obtain a precursor of the separator. A mass ratio of the paraffin oil to the polymer material was 70:30. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent solid electrolyte particles was measured in the region. A difference between a maximum value and a minimum value that were obtained through measurement was a dispersion degree range of the solid electrolyte particles in the porous polymer substrate, which was 7 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 4.8%.

The foregoing separator has porosity of 38%, a pore size of 45 nm, air permeability of 150 s/100 cc, and a thickness of 9 µm.

### Comparative Example 3

This comparative example comparatively describes the separator and the preparation method thereof, and the battery that were disclosed in the present disclosure, including the following operation steps:
The polymer material was polyvinylidene fluoride with a melting point of 155°C in a mass proportion of 59%.

Conventional aluminum oxide particles have a particle size (D50) of 1.5 µm and a mass proportion of 41%.

The aluminum oxide particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000x magnification. A region of 0.5 cm × 0.5 cm in length and width was selected in the SEM image. A distance between adjacent aluminum oxide particles was measured in the region. A difference between a maximum value and a minimum value that were obtained through measurement was a dispersion degree range of the aluminum oxide particles in the porous polymer substrate, which was 1.6 µm.

An SEM image of the surface of the separator was taken at 5000x magnification. A region of 0.5 cm × 0.5 cm in length and width was selected in the SEM image, and the solid electrolyte particles were stained by the software. A ratio of a stained area to a non-stained area was calculated to obtain a particle coverage rate, which was 18.1%.

The foregoing separator has porosity of 43%, a pore size of 50 nm, air permeability of 110 s/100 cc, and a thickness of 7 µm.

### Performance tests

The prepared separator was subjected to the following performance tests:
1. Electrolyte diffusion radius test: The separator was placed in a circular hollow fixture with a radius of 3 cm to make the separator suspended and separated from the tabletop. 30 µL of electrolyte was drawn by using a pipette and added dropwise to the center of the separator. After 30s, the electrolyte diffusion radius was measured. The composition of the electrolyte was DMC:EMC:DEC:EC = 1:3:1:4 plus 1 mol/L LiPF₆.
2. Low-temperature ionic conductivity test: The separator, the positive electrode, the negative electrode, and the electrolyte were assembled to obtain a battery. The prepared battery was placed in an incubator at -20°C for 5 h. Then, the ionic conductivity test was carried out by the ionic conductivity testing method according to the Chinese national standard GB-T36363. Positive electrode: PVDF was dissolved in a specific amount of NMP, and then lithium iron phosphate and a conductive agent were added to obtain a mixture. The mixture was applied to an electrode plate through coating. Negative electrode: SBR, a graphite material, and a conductive agent were added to water to obtain a mixture. The mixture was applied to an electrode plate through coating.
3. Low-temperature cycle performance test: The separator, the positive electrode, the negative electrode, and the electrolyte were assembled to obtain a battery. The prepared battery was placed in an incubator at -10°C for 5 h. Then, the battery was charged and discharged at 0.5C/0.5C for 50 cycles. The first discharge capacity and the last discharge capacity were recorded, and a capacity retention rate was calculated. After 50 cycles of charging and discharging, the battery was disassembled, the negative electrode was taken out and observed, and observation results were recorded.
4. Tensile strength test: For the tensile strength test, refer to the Chinese national standard GB/T36363-2018.

The obtained test results are shown in Table 1.

**Table 1**

| | Example 1 | Example 2 | Example 3 | Example 4 | Example 5 | Comparative Example 1 | Comparative Example 2 | Comparative Example 3 |
|---|---|---|---|---|---|---|---|---|
| Electrolyte diffusion radius (cm) | 1.51 | 1.35 | 1.02 | 1.53 | 0.75 | 1.04 | 0.64 | 1.30 |
| Ionic conductivity at -20°C (mS/cm) | 0.73 | 0.71 | 0.61 | 0.76 | 0.52 | 0.55 | 0.41 | 0.21 |
| 50 cycles capacity retention rate (%) of the battery at-10°C and interface of the disassembled battery | 96.32%/Gol den yellow interface without lithium precipitation and dark spots | 96.12%/Gol den yellow interface without lithium precipitation and dark spots | 95.91%/Gol den yellow interface without lithium precipitation and dark spots | 94.77%/Gol den yellow interface without lithium precipitation and dark spots | 93.28%/Gol den yellow interface with light dark spots at edges | 93.89%/Gold en yellow interface without lithium precipitation and dark spots | 87.89%/Larg e lithium precipitation and more dark spots | 72.74%/Inter face with lithium precipitation and dark spots |
| Separator tensile strength (MPa) | 198 | 215 | 210 | 165 | 205 | 95 | 225 | 185 |

It can be learned from the test results in Table 1 that, when the dispersion degree range of the solid electrolyte particles in the porous polymer substrate was controlled to range from 1 µm to 6 µm, and the particle coverage rate was controlled to range from 5% to 20%, the tensile strength of the separator can be effectively increased while the electrolyte wetting capability and the separator ionic conductivity are ensured, and the capacity retention rate of the battery in low-temperature cycles can be effectively increased, and lithium dendrites and dark spots on the negative electrode are inhibited, thereby improving the safety performance and low-temperature performance of the battery.

The foregoing descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

## Claims

1. A separator, comprising the following components:
a porous polymer substrate and solid electrolyte particles,
the solid electrolyte particles being dispersed in the porous polymer substrate, and the solid electrolyte particles in the porous polymer substrate having a dispersion degree range ranging from 1 µm to 6 µm and a particle coverage rate ranging from 5% to 20%.

2. The separator according to claim 1, wherein the solid electrolyte particles in the porous polymer substrate have the dispersion degree range ranging from 1 µm to 4.5 µm and the particle coverage rate ranging from 12% to 19%.

3. The separator according to claim 1 or 2, wherein based on a total weight of the separator being 100%, a mass content of the porous polymer substrate ranges from 50% to 90%, and a mass content of the solid electrolyte particles ranges from 10% to 50%.

4. The separator according to any one of claims 1 to 3, wherein based on a total weight of the separator being 100%, a mass content of the porous polymer substrate ranges from 50% to 80%, and a mass content of the solid electrolyte particles ranges from 20% to 50%.

5. The separator according to any one of claims 1 to 4, wherein a melting point of the porous polymer substrate ranges from 80°C to 180°C.

6. The separator according to any one of claims 1 to 5, wherein the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride.

7. The separator according to any one of claims 1 to 6, wherein the solid electrolyte particles comprise one or more of Li_{1.3}Al_{0.3}Ti_{1.7}(PO₄)₃, Li₇La₃Zr₂O₁₂, Li_{0.34}La_{0.56}TiO₃, and Li_{1.5}Al_{0.5}Ge_{1.5}(PO₄)₃.

8. The separator according to any one of claims 1 to 7, wherein a particle size D50 of the solid electrolyte particles ranges from 0.5 µm to 5 µm.

9. The separator according to any one of claims 1 to 8, wherein the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.

10. The separator according to any one of claims 1 to 9, wherein a thickness of the separator ranges from 2 µm to 20 µm.

11. A method for preparing the separator according to any one of claims 1 to 10, comprising the following operation steps:
dispersing the solid electrolyte particles in paraffin oil to form a suspension;
mixing the suspension with a polymer material to prepare a precursor of the separator; and
removing the paraffin oil from the precursor of the separator to obtain the separator.

12. The method for preparing the separator according to claim 11, wherein a mass ratio of the polymer material to the paraffin oil is (25-35):(65-75).

13. The method for preparing the separator according to claim 11 or 12, wherein the paraffin oil is removed through organic extraction.

14. A battery, comprising a positive electrode, a negative electrode, and the separator according to any one of claims 1 to 10, the separator being located between the positive electrode and the negative electrode.

15. An electric device, comprising the battery according to claim 14.
